# EUROPÄISCHE PATENTANMELDUNG

(11) **EP 4 173 810 A1**
(43) Veröffentlichungstag der Anmeldung: **03.05.2023**
(21) Anmeldenummer: 22200550.6
(22) Anmeldetag: 10.10.2022
(51) Int. Cl.: B29C 73/16

(54) **PANNENHILFESET MIT ABLASSVENTIL FÜR EINEN FAHRZEUGREIFEN UND VERFAHREN ZUR REGULIERUNG DER DRUCKLUFT IN EINEM FAHRZEUGREIFEN MIT EINEM SOLCHEN ABLASSVENTIL**

(30) Priorität: 19.10.2021 DE 102021211786
(71) Anmelder: Continental Reifen Deutschland GmbH, 30165 Hannover (DE)
(72) Erfinder: Schlosser, Florian, 30165 Hannover (DE); Detering, Rainer, 30165 Hannover (DE)
(74) Vertreter: Continental Corporation

(57) **Zusammenfassung**

Die Erfindung betrifft ein Pannenhilfeset (1)zum Abdichten und Aufpumpen von Fahrzeugreifen, umfassend einen Kompressor zum Erzeugen von Druckluft, wobei der Kompressor einen Zylinderkolben (7) und einen Zylinderkopf (5) mit mindestens einem Luftführungskanal (9, 9', 9'') umfasst, wobei der Luftführungskanal dazu ausgebildet ist, die erzeugte Druckluft in Richtung eines Fahrzeugreifen zu fördern, wobei das Pannenhilfeset mindestens ein Ablassventil (15) zur Regulierung der Druckluft im Fahrzeugreifen aufweist und welches mit dem mindestens einen Luftführungskanal und/oder mit einem Zylinderkopf des Zylinders verbunden ist. Ferner betrifft die Erfindung ein Verfahren zum Abdichten und Aufpumpen von Fahrzeugreifen mit einem beschriebenen Pannenhilfeset, wobei die Druckluft im Fahrzeugreifen über ein Ablassventil reguliert wird.

## Beschreibung

Die Erfindung betrifft ein Pannenhilfeset zum Abdichten und Aufpumpen von Fahrzeugreifen gemäß dem Oberbegriff des Patentanspruchs 1 und ein Verfahren zum Abdichten und Aufpumpen eines Fahrzeugreifens gemäß dem Oberbegriff des Patentanspruchs 9.

Pannenhilfesets oder Pannenhilfekits mit einer Messeinheit sind im Stand der Technik bekannt und werden üblicherweise eingesetzt, um das Pannenhilfeset über einen Schlauch mit dem Fahrzeugreifen beziehungsweise dem Ventil des Reifens zu verbinden. Ein Pannenhilfeset umfasst üblicherweise einen Kompressor zur Erzeugung von Druckluft, durch die ein Dichtmittel zum Abdichten eines Fahrzeugreifens im Falle einer Panne in den Fahrzeugreifen gepumpt wird und/oder den Fahrzeugreifen nach dem Abdichten mit Luft zu befüllen.

Ablassventile in Pannenhilfesets sind beispielsweise aus der EP3383630 bekannt. Ein solches Pannenhilfeset weist ein manuell betätigbares Druckablassventil zur Verringerung des Reifendrucks auf, wobei das Druckablassventil so ausgebildet ist, dass bei angeschlossenem Dichtmittelbehälter und/oder während der Förderung von Dichtmittel aus dem Dichtmittelbehälter in den Reifen eine Betätigung bzw. ein Ablassen des Drucks verhindert ist.

Derzeitige Entwicklungen von Pannenhilfesets führen zu immer kleineren Bauteilen, weshalb funktionelle Elemente, wie beispielsweise ein Ablassventil, am Pannenhilfeset mit anderen Elementen zusammengeführt oder verbessert angeordnet werden müssen, wobei die Funktionsfähigkeit des Pannenhilfesets für den Verbraucher weiterhin gegeben sein sollte.

Hier setzt die vorliegende Erfindung an. Es ist die Aufgabe der vorliegenden Erfindung ein Pannenhilfeset für einen Fahrzeugreifen bereitzustellen, welches einen verbesserten Aufbau aufweist und insbesondere kostengünstiger herzustellen ist. Ferner ist die Aufgabe der vorliegenden Erfindung ein Verfahren bereitzustellen, durch welches ein Fahrzeugreifen einfacher abgedichtet und/oder aufgepumpt werden kann.

Gelöst wird die Aufgabe der vorliegenden Erfindung durch ein Pannenhilfeset zum Abdichten und Aufpumpen von Fahrzeugreifen mit den Merkmalen des Patentanspruchs 1 sowie durch ein Verfahren zum Abdichten und Aufpumpen von Fahrzeugreifen mit den Merkmalen des Patentanspruchs 9.

Gelöst wird die Aufgabe der vorliegenden Erfindung durch ein Pannenhilfeset zum Abdichten und Aufpumpen von Fahrzeugreifen, umfassend einen Kompressor zum Erzeugen von Druckluft, wobei der Kompressor einen Zylinderkolben und einen Zylinderkopf mit mindestens einem Luftführungskanal umfasst, wobei der Luftführungskanal dazu ausgebildet ist, die erzeugte Druckluft in Richtung eines Fahrzeugreifen zu fördern, wobei das Pannenhilfeset mindestens ein Ablassventil zur Regulierung der Druckluft im Fahrzeugreifen aufweist und welches mit dem mindestens einen Luftführungskanal und/oder mit einem Zylinderkopf des Zylinders verbunden ist.

Vorteilhafterweise kann das Ablassventil somit individuell und flexibel im Gehäuse des Pannenhilfesets angeordnet werden. Das Ablassventil kann dadurch an jeder beliebigen für den Benutzer nützlichen Position am Gehäuse angeordnet werden, wodurch die Bedienung deutlich verbessert wird. Solch erfindungsgemäße Pannenhilfesets können somit komprimierter hergestellt werden, wodurch Herstellungskosten reduziert werden. Außerdem oder alternativ ist eine Kombination des Ablassventils mit dem Zylinderkopf ein deutlicher Vorteil, das Pannenhilfeset durch die Reduzierung der einzelnen Bauteile komprimierter und kostengünstiger hergestellt werden kann.

Das erfindungsgemäße Ablassventil ist dazu ausgebildet, die Druckluft im Fahrzeugreifen zu regulieren. Der Benutzer kann bei Betätigung des Ablassventils die Luft aus dem Fahrzeugreifen entweichen lassen. Das Ablassventil ist dazu vorzugsweise als Druckknopf ausgebildet, der durch Betätigung die Luft entweichen lässt. Andere Ausgestaltungen des Ablassventils sind ebenfalls möglich. Üblicherweise ist das Ablassventil zumindest teilweise aus Kunststoff. Das Ablassventil aus Kunststoff ist kostengünstig herzustellen und kann einfach im Gehäuse des Pannenhilfesets angeordnet werden, welches üblicherweise auch aus Kunststoff ist.

Vorzugsweise ist das Ablassventil an einer der Seitenfläche des Gehäuses des Pannenhilfesets angeordnet. Vorteilhafterweise kann der Benutzer das Ablassventil jederzeit einfach betätigen, auch während er das Gehäuse beispielsweise in der Hand hält. Die obere Fläche des Gehäuses ist üblicherweise die, die die Messinstrumente, wie beispielsweise eine Druckanzeige, und optional einen Anschluss für einen Dichtmittelbehälter aufweisen.

In einer bevorzugten Ausführungsform der Erfindung ist das Ablassventil über einen zusätzlichen Kanal mit dem mindestens einen Luftführungskanal und/oder mit dem Zylinderkopf verbunden. Der zusätzliche Kanal kann auch als erweiterter Kanal des Luftführungskanals bezeichnet werden. Erfindungsgemäß erstreckt sich dieser Kanalabschnitt allerdings zum Ablassventil, über das die Druckluft regulierbar ist. In einer besonders bevorzugten Ausführungsform ist der zusätzliche Kanal oder Kanalabschnitt flexibel oder zumindest teilweise flexibel.

Im Sinne der Erfindung wird der Begriff flexibel als leicht biegsam und/oder elastisch verformbar verstanden, ohne, dass die Funktionseigenschaften beim Biegen oder Verformen verloren gehen. Auch wenn der Kanal verformt ist, kann entsprechend weiterhin Luft durch diesen strömen.

Vorteilhafterweise kann das Ablassventil an jeder beliebigen Stelle des Gehäuses des Pannenhilfesets angeordnet werden. Der flexible Kanal kann beispielsweise ein Schlauch sein.

In einer weiteren bevorzugten Ausführungsform der Erfindung umfasst der zusätzliche Kanal mindestens einen Kunststoff, besonders bevorzugt Polyethylen und/oder Polyurethan, und/oder einen Kautschuk. Ein solches Material ist vorteilhaft, das das Ablassventil somit einfach an einer beliebigen Position im Gehäuse angeordnet werden kann.

Weiterhin bevorzugt ist der mindestens eine Luftführungskanal im Wesentlichen starr ausgebildet. Üblicherweise ist der Luftführungskanal mit dem Zylinderkopf verbunden, damit die erzeugte Druckluft durch die Luftführungskanal strömen kann. Der Luftführungskanal ist dafür ortsfest im Gehäuse angeordnet. Vorteilhafterweise ist das System aus Zylinder und Luftführungskanal somit stabil und weniger störanfällig, wenn das Pannenhilfeset benutzt oder transportiert wird.

Ferner bevorzugt ist der mindestens eine Luftführungskanal mit einem Behälteranschluss verbunden und/oder einen aufweist, insbesondere für einen Dichtmittelbehälter. Über den Dichtmittelbehälter kann Dichtmittel über die erzeugte Druckluft in den Fahrzeugreifen gepumpt werden. Das Dichtmittel dient hierbei zum Abdichten des Fahrzeugreifen. Der Luftführungskanal kann dafür entweder selbst einen Anschluss für den Dichtmittelbehälter aufweisen oder über einen Kanal mit einem Anschluss verbunden sein.

In einer weiteren bevorzugten Ausführungsform der Erfindung ist das Ablassventil an einem Verbindungselement angeordnet, wobei das Verbindungselement zwischen zwei Abschnitte des Luftführungskanals angeordnet ist, besonders bevorzugt zwischen dem Zylinderkopf und dem Behälteranschluss. Das Verbindungselement ist ein separates Bauteil, welches mit dem Luftführungskanal verbindbar ist. Das Verbindungselement kann am Ende des Luftführungskanals angeordnet sein oder zwischen zwei Abschnitte des Luftführungskanals. Das Verbindungselement umfasst insbesondere ein flexibles Material, beispielsweise Kunststoff und/oder Gummi. Vorteilhafterweise kann das Verbindungselement einfach und platzsparend in das Gehäuse des Pannenhilfesets eingebaut und angeordnet werden, wodurch Herstellungskosten gesenkt werden können.

Ferner bevorzugt ist ein Manometer zum Ablesen der Druckluft mit dem Luftführungskanal und/oder dem zusätzlichen Kanal verbunden. Der zusätzliche Kanal ist mit dem Ablassventil verbunden, wobei die Druckluft über das Ablassventil regulierbar ist. Vorteilhafterweise kann der Benutzer den Druck im Fahrzeugreifen über das Manometer ablesen.

Weiterhin bevorzugt ist das Ablassventil in einem Manometer integriert. Dazu ist denkbar, dass das Ablassventil beispielsweise durch ein Druckmechanismus des Manometers betätigbar ist. Vorteilhafterweise kann der Aufbau des Pannenhilfesets somit deutlich komprimiert werden.

Alternativ oder zusätzlich können bevorzugt das Ablassventil und optional zusätzlich das Manometer beziehungsweise der Anschluss für das Manometer in den Zylinderkopf integriert sein. Dazu ist vorstellbar, dass das Ablassventil und der Zylinderkopf als ein Bauteil ausgebildet sind. Wesentlich ist, dass das Ablassventil zumindest über einen zusätzlichen Kanal die Druckluft regulieren kann. Vorteilhafterweise kann das Pannenhilfeset durch die Integration der Bauteile platzsparender gebaut werden, wodurch beispielsweise Kosten eingespart werden können.

Außerdem wird die Aufgabe der Erfindung durch Verfahren zum Abdichten und Aufpumpen von Fahrzeugreifen mit einem beschriebenen Pannenhilfeset gelöst, wobei die Druckluft im Fahrzeugreifen über ein Ablassventil reguliert wird.

Vorteilhafterweise ist ein solches erfindungsgemäßes Verfahren eine Verbesserung gegenüber dem Stand der Technik, da das Ablassventil am Gehäuse des Pannenhilfesets für den Benutzer einfach zugänglich angeordnet werden kann. Der Benutzer kann somit die Druckluft im Fahrzeugreifen einfacher regulieren.

Die beschriebenen Aspekte in Bezug auf die Vorrichtung, einschließlich die bevorzugten Ausführungsformen, gelten insbesondere auch für das erfindungsgemäße Verfahren, sofern dies für den Fachmann technisch sinnvoll umsetzbar ist.

In einer bevorzugten Ausführungsform des Verfahrens umfasst dieses folgende Schritte:
- Anschließen des beschriebenen Pannenhilfesets an einen Fahrzeugreifen,
- Erzeugen von Druckluft mittels eines Kompressors,
- Optionales Einfüllen von Dichtmittel in den Fahrzeugreifen und
- Aufbauen von Druckluft im Fahrzeugreifen,
dadurch gekennzeichnet, dass
die Druckluft im Fahrzeugreifen über ein Ablassventil regulierbar ist.

Ferner betrifft die Erfindung die Verwendung eines beschriebenen Pannenhilfesets zum Reparieren eines Fahrzeugreifens.

Vorteilhaft ist, dass ein solches verbessertes Pannenhilfeset für den Benutzer im Pannenfall eines Fahrzeugreifens einfach zum Abdichten und Aufpumpen des Fahrzeugreifens eingesetzt werden kann. Insbesondere das Ablassventil, welches im erfindungsgemäßen Pannenhilfeset an beliebiger Position angeordnet werden kann, ist für den Benutzer eine einfache Möglichkeit, die Druckluft im Fahrzeugreifen zu regulieren.

Weitere Vorteile und Merkmale des erfindungsgemäßen Pannenhilfesets sowie des Verfahrens ergeben sich nebst der Beschreibung zusätzlich aus den Unteransprüchen, die sich auf vorteilhafte Ausgestaltungen der vorliegenden Erfindung beziehen und als solche nicht einschränkend zu verstehen sind. Von der Erfindung mit umfasst sind auch Kombinationen der Merkmale verschiedener Unteransprüche, auch wenn sich die Unteransprüche nicht aufeinander beziehen oder wenn diese verschiedenen Anspruchskategorien zugehören. Ferner sind auch Kombinationen von bevorzugten und besonders bevorzugten Ausführungsformen untereinander miteinander kombinierbar. Dies gilt auch für die einzelnen Merkmale der nachfolgenden diskutierten Ausführungsbeispiele, soweit dies nicht für den Fachmann als zwingend zueinander gehörig erkennbar sind.

### Figurenbeschreibung

Weitere Einzelheiten und Vorteile der vorliegenden Erfindung ergeben sich aus der nachfolgenden Beschreibung der Ausführungsführungsbeispiele in Verbindung mit den Zeichnungen. In diesen zeigen
- Figur 1: eine erste Ausführungsform des erfindungsgemäßen Pannenhilfesets,
- Figur 2: eine zweite Ausführungsform des erfindungsgemäßen Pannenhilfesets und
- Figur 3: eine dritte Ausführungsform des erfindungsgemäßen Pannenhilfesets.

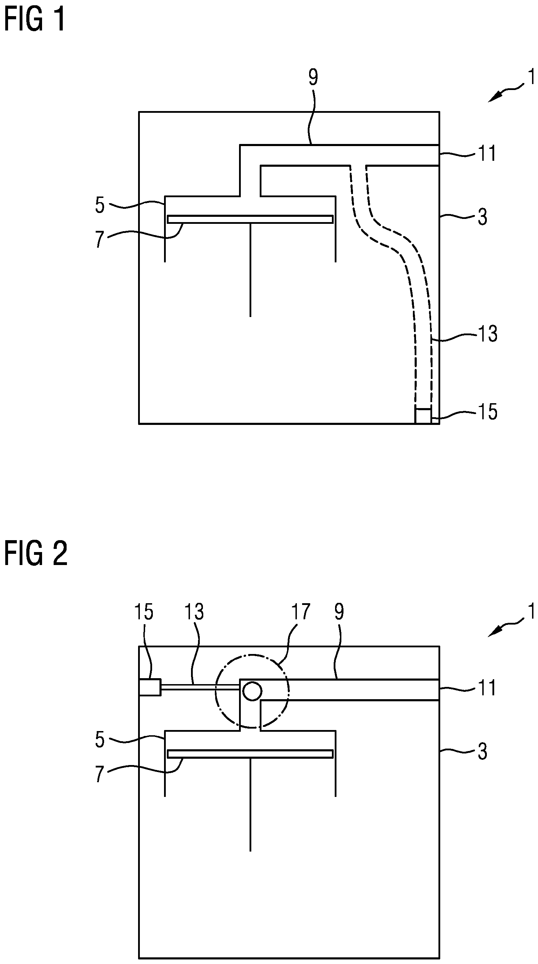

Figur 1 zeigt eine erste Ausführungsform des erfindungsgemäßen Pannenhilfesets 1 in Draufsicht mit einem in einem Gehäuse 3 angeordneten Zylinderkopf 5 und einem Zylinderkolben 7, durch die Druckluft erzeugt wird. Vom Zylinderkopf 5 erstreckt sich ein Luftführungskanal 9, durch den die erzeugte Druckluft strömt und am Luftauslass 11 über einen nicht dargestellten Schlauch in einen Fahrzeugreifen strömen kann. Der Luftführungskanal 9 weist einen zusätzlichen flexiblen Kanal 13 auf, an welchem ein Ablassventil 15 am Ende angeordnet ist. Das Ablassventil 15 ist im Gehäuse 3 des Pannenhilfesets 1 angeordnet und kann vom Benutzer zur Regulierung der Druckluft im Fahrzeugreifen betätigt werden.

Figur 2 zeigt eine zweite Ausführungsform des erfindungsgemäßen Pannenhilfesets 1 in Draufsicht mit einem in einem Gehäuse 3 angeordneten Zylinderkopf 5 und einem Zylinderkolben 7, durch die Druckluft erzeugt wird. Vom Zylinderkopf 5 erstreckt sich ein Luftführungskanal 9, durch den die erzeugte Druckluft strömt und am Luftauslass 11 über einen nicht dargestellten Schlauch in einen Fahrzeugreifen strömen kann. Mit dem Luftführungskanal 9 ist ein Manometer 17 verbunden, welches im Gehäuse 3 angeordnet ist und vom Benutzer ablesbar ist. Ausgehend vom Manometer erstreckt sich ein zusätzlicher Kanal 13, der zum Ablassventil 15 führt.

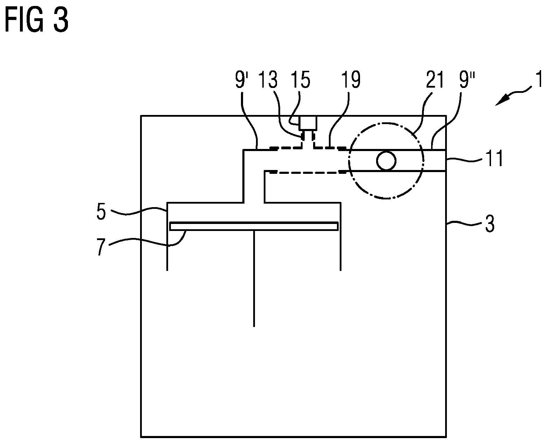

Figur 3 zeigt eine dritte Ausführungsform des erfindungsgemäßen Pannenhilfesets 1 in Draufsicht mit einem in einem Gehäuse 3 angeordneten Zylinderkopf 5 und einem Zylinderkolben 7, durch die Druckluft erzeugt wird. Vom Zylinderkopf 5 erstreckt sich ein erster Abschnitt des Luftführungskanal 9', der mit einem Verbindungselement 19 führt. Das Verbindungselement 19 ist als T-Form ausgebildet, wobei die erzeugte Druckluft in Richtung eines zweiten Abschnitts des Luftführungskanals 9" strömen kann. Am Verbindungselement 19 ist das Ablassventil 15 über einen zusätzlichen Kanal 13 angeordnet, wodurch der Benutzer die Druckluft im Fahrzeugreifen regulieren kann. Ferner ist am zweiten Abschnitt des Luftführungskanals 9" ein Dichtmittelbehälter 21 angeordnet. Durch den Dichtmittelbehälter 21 kann Dichtmittel durch den zweiten Abschnitt des Luftführungskanals 9" in den Fahrzeugreifen gepumpt werden, um diesen abzudichten. Dazu wird der Dichtmittelbehälter 21 auf eine Öffnung am Gehäuse 3 geschraubt und gesteckt, wobei sich der Dichtmittelbehälter 21 üblicherweise beim Aufschrauben oder Aufstecken öffnet.

### Bezugszeichenliste:

- 1: Pannenhilfeset
- 3: Gehäuse
- 5: Zylinderkopf
- 7: Zylinderkolben
- 9: Luftführungskanal
- 9': erste Abschnitt des Luftführungskanals
- 9": zweite Abschnitt des Luftführungskanals
- 11: Luftauslass am Gehäuse
- 13: zusätzlicher flexibler Kanal
- 15: Ablassventil
- 17: Manometer
- 19: Verbindungselement
- 21: Dichtmittelbehälter

## Patentansprüche

1. Pannenhilfeset (1) zum Abdichten und Aufpumpen von Fahrzeugreifen, umfassend einen Kompressor zum Erzeugen von Druckluft, wobei der Kompressor einen Zylinderkolben (7) und einen Zylinderkopf (5) mit mindestens einem Luftführungskanal (9, 9',9") umfasst, wobei der Luftführungskanal (9, 9',9") dazu ausgebildet ist, die erzeugte Druckluft in Richtung eines Fahrzeugreifen zu fördern,
**dadurch gekennzeichnet, dass**
das Pannenhilfeset (1) mindestens ein Ablassventil (15) zur Regulierung der Druckluft im Fahrzeugreifen aufweist und welches mit dem mindestens einen Luftführungskanal (9, 9',9") und/oder mit einem Zylinderkopf (5) des Zylinders verbunden ist.

2. Pannenhilfeset (1) nach Anspruch 1, **dadurch gekennzeichnet, dass** das Ablassventil über einen zusätzlichen Kanal (13), bevorzugt über einen flexiblen Kanal, besonders bevorzugt über einen Schlauch, mit dem mindestens einen Luftführungskanal (9, 9',9") und/oder mit dem Zylinderkopf (5) verbunden ist.

3. Pannenhilfeset (1) nach Anspruch 2, **dadurch gekennzeichnet, dass** der zusätzliche Kanal (13) mindestens einen Kunststoff, bevorzugt Polyethylen und/oder Polyurethan, und/oder einen Kautschuk umfasst.

4. Pannenhilfeset (1) nach einem der vorherigen Ansprüche, **dadurch gekennzeichnet, dass** der mindestens eine Luftführungskanal (9, 9',9") im Wesentlichen starr ausgebildet ist.

5. Pannenhilfeset (1) nach einem der vorherigen Ansprüche, **dadurch gekennzeichnet, dass** der mindestens eine Luftführungskanal (9, 9',9") mit einem Behälteranschluss verbunden ist und/oder einen aufweist, insbesondere für einen Dichtmittelbehälter (21).

6. Pannenhilfeset (1) nach einem der vorherigen Ansprüche, **dadurch gekennzeichnet, dass** das Ablassventil (15) an einem Verbindungselement (19) angeordnet ist, wobei das Verbindungselement (19) zwischen zwei Abschnitte des Luftführungskanals (9, 9',9") angeordnet ist, bevorzugt zwischen dem Zylinderkopf (5) und dem Behälteranschluss.

7. Pannenhilfeset (1) nach einem der vorherigen Ansprüche, **dadurch gekennzeichnet, dass** ein Manometer (17) zum Ablesen der Druckluft mit dem Luftführungskanal (9, 9',9") und/oder dem zusätzlichen Kanal (13) verbunden ist.

8. Pannenhilfeset (1) nach einem der vorherigen Ansprüche, **dadurch gekennzeichnet, dass** das Ablassventil (15) in einem Manometer (17) integriert ist.

9. Verfahren zum Abdichten und Aufpumpen von Fahrzeugreifen mit einem Pannenhilfeset (1) nach einem der Ansprüche 1 bis 8, **dadurch gekennzeichnet, dass** die Druckluft im Fahrzeugreifen über ein Ablassventil (15) reguliert wird.

10. Verwendung eines Pannenhilfesets (1) nach einem der Ansprüche 1 bis 8 zum Reparieren eines Fahrzeugreifens.
